# EUROPEAN PATENT APPLICATION

(11) **EP 2 308 665 A1**
(43) Date of publication of application: **13.04.2011**
(21) Application number: 10161307.3
(22) Date of filing: 28.04.2010
(51) Int. Cl.: B29C 47/12, B29C 47/04, B29C 47/56, B29D 30/62

(54) **Multiple-preformer die of extrusion mold for tire treads**

(30) Priority: 24.09.2009 KR 20090090530
(71) Applicant: Hankook Tire Co., Ltd, Gangnam-Gu Seoul 135-723 (KR)
(72) Inventor: Choi, Sung Hyun, Daeduk-gu, Daejeon 306-804 (KR); Park, Dong Myung, Seo-gu, Daejeon 302-772 (KR); Jun, Jae Hoo, Yuseong-gu, Daejeon 305-390 (KR)
(74) Representative: Intès, Didier Gérard André

(57) **Abstract**

Disclosed is an extrusion mold for tire treads that extrudes semi-finished tires, for example, a cap tread, a wing tread and a sub tread. The preformer includes a first preformer die-holder (4) having a wing tread flow-path (1), a cap tread flow-path (2) and a sub tread flow-path (3) formed therein, a second preformer die-holder (6), and a final die (5) inserted into the second preformer die-holder and ejecting an extrudate. The improvement of the preformer die includes a middle upper preformer die (7a) and a middle lower preformer die (7b) between the first and second preformer die-holders (4, 6) to be brought into contact with the final die (5). The middle upper preformer die (7a) is formed with a wing tread-connecting guide groove (1a) and a cap tread-connecting guide groove (2a) communicating with the wing tread flow-path (1) and the cap tread flow-path (2), respectively. The middle lower preformer die (7b) is formed with a sub tread-connecting guide groove (3a) communicating with the sub tread flow-path (3).

## Description

### BACKGROUND OF THE INVENTION

### 1. Field of the Invention

The present invention relates to an extrusion mold for tire treads that extrudes an assembly of semi-finished tires, for example, a cap tread, a wing tread and a sub tread, in a process of manufacturing a tire and, more particularly, to a multiple-preformer die of an extrusion mold for tire treads that has an improved structure including preformers and rubber flow-paths in the preformers so as to allow the use of final dies of various standards and to facilitate adjustment of a boundary surface between respective tread rubbers.

### 2. Description of the Related Art

In an extrusion process for manufacturing a tire, a compounded rubber produced by a refining process is sequentially supplied to an extruder through a breakdown roll and a warming roll and an extrudate having a constant shape according to a fabrication specification is finally ejected through a regulated preformer die of the extruder. Here, treads of the extrudate include a cap tread, a wing tread, a sub tread, and the like.

A conventional preformer die of an extrusion mold for tire treads is generally classified into a pressure type and an overlapping piece type.

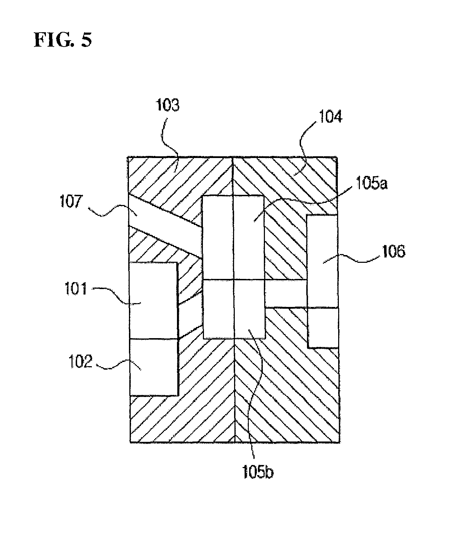

Referring to Fig. 5, the pressure type preformer die includes first and second preformer die holders 103, 104, first upper and lower preformers 101 and 102 mounted to the first preformer die-holder 103, second upper and lower preformers 105a and 105b mounted between the first and second preformer die-holders 103 and 104, and a final die 106 mounted to the second preformer die-holder 104.

Reference number 107 indicates a flow-path for the wing tread.

Since the preformers have a retractably insertable cassette type structure and are inserted into the preformer die-holders, the conventional preformer die employs final dies of multiple standards to allow rapid substitution of the final die of various standards, but suffers difficulty in adjustment of a boundary surface between the respective tread rubbers.

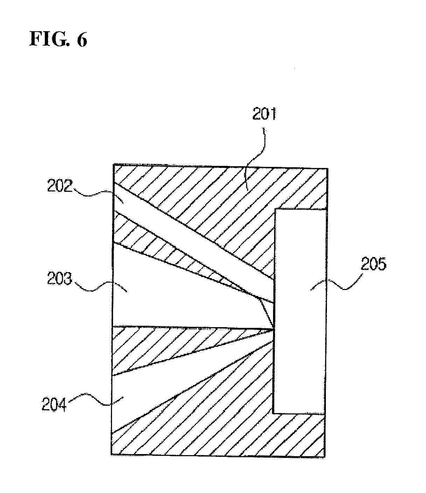

Referring to Fig. 6, the overlapping piece type preformer die includes a preformer die-holder 210, which has a wing tread flow-path 202, a cap tread flow-path 203 and a sub tread flow-path 204 defined therein, and a final die 205 mounted to the preformer die-holder 201. Accordingly, the overlapping piece type preformer die allows easy adjustment of the boundary surface between the respective tread rubbers, but requires substitution of the preformer die-holder for substitution of the final die, so that it is impossible to employ final dies of various standards or it takes long time to replace the final die, thereby causing inconvenience.

### SUMMARY OF THE INVENTION

The present invention is conceived to solve the problems of the related art, and an aspect of the invention is to provide a multiple-preformer die of an extrusion mold for tire treads which can realize the advantages of the pressure type preformer die allowing the use of final dies of various standards and the overlapping piece type preformer die allowing easy adjustment of a boundary surface between respective tread rubbers.

In accordance with an aspect of the invention, a multiple-preformer die of an extrusion mold for tire treads includes a first preformer die-holder having a wing tread flow-path, a cap tread flow-path and a sub tread flow-path, a second preformer die-holder, and a final die inserted into the second preformer die-holder and ejecting an extrudate. The improvement includes a middle upper preformer die and a middle lower preformer die interposed between the first and second preformer die-holders to be brought into contact with the final die. The middle upper preformer die is formed with a wing tread-connecting guide groove and a cap tread-connecting guide groove communicating with the wing tread flow-path and the cap tread flow-path of the first preformer die-holder, respectively. The middle lower preformer die is formed with a sub tread-connecting guide groove communicating with the sub tread flow-path of the first preformer die-holder.

### BRIEF DESCRIPTION OF THE DRAWINGS

The above and other aspects, features and advantages of the invention will become apparent from the following detailed description in conjunction with the accompanying drawings, in which:
Fig. 1 is a coupled sectional view of a multiple-preformer die of an extrusion mold for tire treads in accordance with one embodiment of the present invention;
Fig. 2 is an enlarged front view of middle upper and lower preformer dies of Fig. 1;
Fig. 3 is a coupled sectional view of a double-preformer die of an extrusion mold for tire treads in accordance with another embodiment of the present invention;
Fig. 4 is an enlarged front view of middle upper and lower preformer dies of Fig. 3;
Fig. 5 is a coupled sectional view of a conventional pressure type preformer die of an extrusion mold; and
Fig. 6 is a coupled sectional view of a conventional overlapping piece type preformer die of an extrusion mold.

### DETAILED DESCRIPTION OF THE EMBODIMENTS

Embodiments of the invention will now be described in detail with reference to the accompanying drawings.

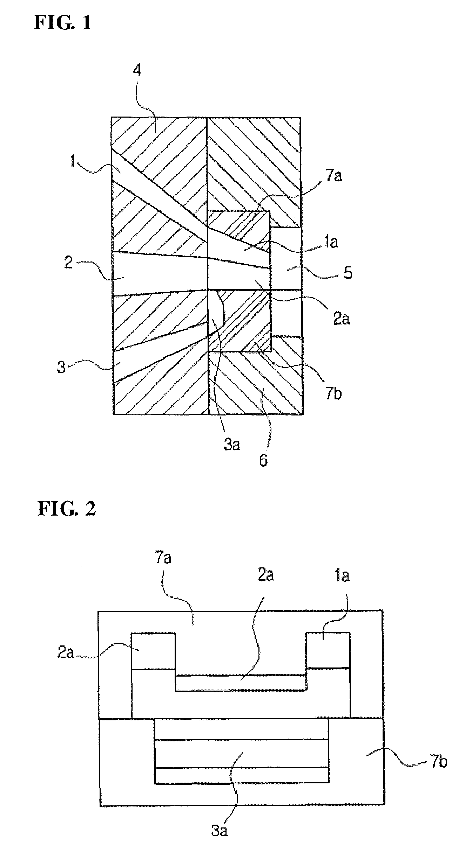

Figs. 1 and 2 illustrate a multiple-preformer die of an extrusion mold for tire treads in accordance with one embodiment of the invention, in which Fig. 1 is a coupled sectional view and Fig. 2 is an enlarged front view of an upper preformer die and a lower preformer of Fig. 1.

The present invention relates to a preformer die of an extruder for treads in a process of manufacturing a tire. The terms of the treads will now be defined before the description of the invention.

Herein, a wing tread refers to a component of a tread that is located at a boundary surface between a cap tread and a side wall of the tread to improve crack resistance and adhesive properties between the cap tread and the side wall.

The cap tread is a rubber layer on a portion of the tire that will be brought into contact with the road surface, and a sub tread is a rubber layer between an inner cord layer and the cap tread.

According to one embodiment of the invention, a preformer die of an extrusion mold for tire treads includes a first preformer die-holder 4 having a wing tread flow-path 1, a cap tread flow-path 2 and a sub tread flow-path 3 formed therein, a second preformer die-holder 6, and a final die 5 inserted into the second preformer die-holder 6 and ejecting an extrudate. Further, the preformer die includes a middle upper preformer die 7a and a middle lower preformer die 7b interposed between the first and second preformer die-holders 4 and 6 to be brought into contact with the final die 5. The middle upper preformer die 7a is formed with a wing tread-connecting guide groove 1a and a cap tread-connecting guide groove 2a that communicate with the wing tread flow-path 1 and the cap tread flow-path 2 of the first preformer die-holder 4, respectively. The middle lower preformer die 7b is formed with a sub tread-connecting guide groove 3a that communicates with the sub tread flow-path 3 of the first preformer die-holder 4.

In this embodiment, the middle upper and lower preformer dies 7a and 7b have a retractably insertable cassette type structure and are mounted between the first preformer die-holder 4, which has the wing tread flow-path l, the cap tread flow-path 2 and the sub tread flow-path 3 therein, and the second preformer die-holder 6. Further, the final die 5 is inserted into the second preformer die-holder 6 and finally mounted to the middle upper and lower preformer dies 7a and 7b to be in contact with each other.

As shown in Fig. 2, the middle upper preformer die 7a is formed with the wing tread-connecting guide groove 1a and the cap tread-connecting guide groove 2a, and the middle lower preformer die 7b is formed with the sub tread-connecting guide groove 3a.

Therefore, according to this embodiment, a rubber flow from the first preformer die-holder 4 is forcibly distributed from a start portion of the first preformer die-holder 4 to a start portion of the second preformer die holder 6 to form the wing tread, cap tread and sub tread as in the conventional overlapping piece type, thereby allowing easier adjustment of a boundary surface between the respective tread rubbers than in the conventional pressure type. Further, the middle upper and lower preformer dies 7a and 7b have a retractably insertable cassette type structure and are mounted to the second preformer die-holder 6 as in the conventional pressure type, thereby enabling rapid substitution of final dies of various standards.

Specifically, the middle upper preformer die 7a of the retractably insertable cassette type structure is formed with the wing tread-connecting guide groove 1a and the cap tread-connecting guide groove 2a so that a distance between the opposite wing tread-connecting guide grooves 1a and a horizontal length of the cap tread-connecting guide groove 2a are adjusted to large, medium and small sizes corresponding to the standard of the final die 5, and the middle lower preformer die 7b of the retractably insertable cassette type structure is formed at a starting point thereof with the sub tread-connecting guide groove 3a so that a horizontal length of the sub tread-connecting guide groove 3a is adjusted to large, medium and small sizes corresponding to the standard of the final die 5.

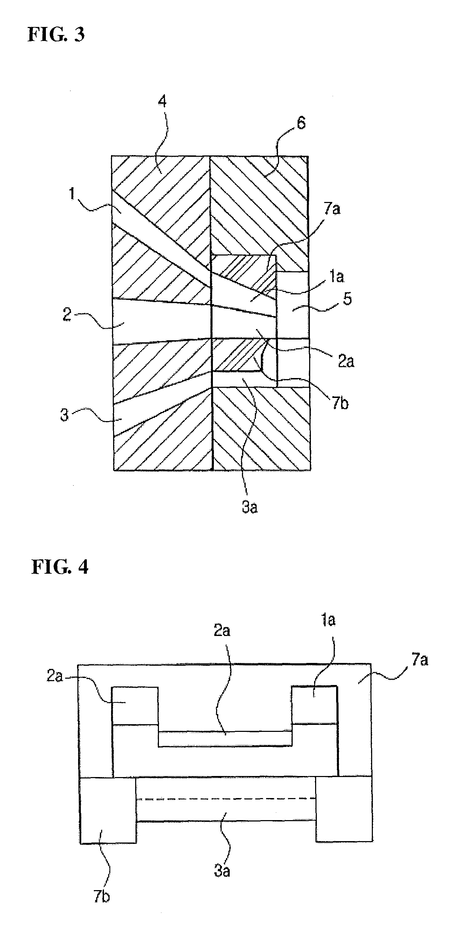

Figs. 3 and 4 illustrate a preformer die of an extrusion mold for tire treads in accordance with another embodiment. In this embodiment, the sub tread-connecting guide groove 3a of the middle lower preformer die 7b extends to an end point of the middle lower preformer die 7b and a start point of the final die 5.

Accordingly, in the preformer die according to this embodiment shown in Figs. 3 and 4, the middle lower preformer die 7b has a retractably insertable cassette type structure and allows a horizontal length of the sub tread-connecting guide groove 3a to be adjusted so as to have large, medium and small sizes corresponding to the standard of the final die 5.

In the multiple-preformer die according to the embodiments, the upper and lower preformers have a retractably insertable cassette structure and are configured to allow replacement with preformers of large, medium and small sizes according to the standard of the final dies, so that final dies of various standards can be used (advantage of the pressure type preformer die), a boundary surface between the respective tread rubbers can be easily adjusted (advantage of the overlapping piece type preformer die), and back pressure acing on the preformer is significantly lowered as compared with the related art.

Although some embodiments have been provided to illustrate the invention in conjunction with the drawings, it will be apparent to those skilled in the art that the embodiments are given by way of illustration only, and that various modifications, changes, alterations, and equivalent embodiments can be made without departing from the spirit and scope of the invention. The scope of the invention should be limited only by the accompanying claims.

## Claims

1. In a multiple-preformer die of an extrusion mold for tire treads that includes a first preformer die-holder (4) having a wing tread flow-path (1), a cap tread flow-path (2) and a sub tread flow-path (3) formed therein, a second preformer die-holder (6), and a final die (5) inserted into the second preformer die-holder (6) and ejecting an extrudate, the improvement **characterized in that** it comprises:
a middle upper preformer die (7a) and a middle lower preformer die (7b) interposed between the first and second preformer die-holders (4, 6) to be brought into contact with the final die (5),
wherein the middle upper preformer die (7a) is formed with a wing tread-connecting guide groove (1a) and a cap tread-connecting guide groove (2a) communicating with the wing tread flow-path (1) and the cap tread flow-path (2) of the first preformer die-holder (4), respectively, and
wherein the middle lower preformer die (7b) is formed with a sub tread-connecting guide groove (3a) communicating with the sub tread flow-path (3) of the first preformer die-holder (4).

2. The multiple-preformer die of claim 1, **characterized in that** the sub tread-connecting guide groove (3a) of the middle lower preformer die (7b) extends to an end point of the middle lower preformer die and a start point of the final die (5).

3. The multiple-preformer die of claim 1, **characterized in that** the middle upper and lower preformer dies (7a, 7b) have a retractably insertable cassette type structure to allow substitution of various standards.
